(19)

Europäisches
Patentamt
European
Patent Office
Office européen
des brevets

(11) **EP 2 418 477 A1**

(12) **EUROPEAN PATENT APPLICATION**
published in accordance with Art. 153(4) EPC

(43) Date of publication:
**15.02.2012 Bulletin 2012/07**

(51) Int Cl.:
***G01N 25/18*** (2006.01)

(21) Application number: **10750542.2**

(22) Date of filing: **08.03.2010**

(86) International application number:
**PCT/JP2010/001610**

(87) International publication number:
**WO 2010/103784 (16.09.2010 Gazette 2010/37)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **11.03.2009 JP 2009058570**

(71) Applicants:
• **Josho Gakuen Educational Foundation
Osaka 535-8585 (JP)**
• **Espec Corp.
Kita-ku
Osaka-shi
Osaka 530-8550 (JP)**

(72) Inventors:
• **OGUSHI, Tetsuro
Kure-shi
Hiroshima 737-0112 (JP)**

• **NAKAGAWA, Yasutoshi
Osaka-shi
Osaka 530-8550 (JP)**
• **HIRATA, Takuya
Osaka-shi
Osaka 530-8550 (JP)**
• **TANAKA, Hirokazu
Osaka-shi
Osaka 530-8550 (JP)**

(74) Representative: **Schwabe - Sandmair - Marx
Patentanwälte
Stuntzstraße 16
81677 München (DE)**

(54) **HEAT CONDUCTION MEASURING DEVICE AND HEAT CONDUCTION MEASURING METHOD**

(57)     A thermal conduction measuring apparatus (10) comprising: an upper rod (23) thermally connected to a heating source; a lower rod (25) thermally connected to a cooling source; a cartridge (24) having a sample block (24a) thermally coupled with the upper rod (23) and a sample block (24b) thermally coupled with the lower rod (25), and sandwichingly holding a sample (W) between the sample blocks (24a, 24b); a temperature sensor (45, 46) adapted to measure respective temperatures of the sample blocks (24a, 24b); a temperature calculation section (66) operable to derive a temperature gradient in the upper rod (23) and a temperature gradient in the lower rod (25) and then derive a temperature difference between the sample blocks (24a, 24b) from the temperatures measured by the temperature sensor (45, 46); and a physical-property-value derivation section (67) operable to derive a thermal conduction-related physical property value of the sample (W) based on a calculation result by the temperature calculation section (66).

FIG. 1

EP 2 418 477 A1

**Description**

TECHNICAL FIELD

The present invention relates to a thermal conduction measuring apparatus and a thermal conduction measuring method.

BACKGROUND ART

Heretofore, as an apparatus for measuring a thermal conduction-related physical property value of a target material, such as a resin material, by a steady state method, a thermal resistance measuring apparatus has been known, as disclosed in the following Patent Document 1. The measuring apparatus disclosed in the Patent Document 1 is designed such that a target material is sandwiched by a pair of members (clamp members) to form a layered body, and the layered body is sandwiched between an upper rod and a lower rod. The upper rod is connected to a heat source, and configured to allow a temperature measurement to be performed at a plurality of positions in a longitudinal direction thereof. The lower rod is connected to a cooling device, and configured to allow a temperature measurement to be performed at a plurality of positions in a longitudinal direction thereof.

In this measuring apparatus, under a condition that a load is applied to the layered body by the upper rod and the lower rod, a heat flow is produced, and the temperature measurement is performed at the plurality of positions in each of the upper and lower rods to measure a thermal resistance of the layered body. Further, as a preliminary test, a thermal resistance of each of the clamp members is preliminarily measured, and a thermal resistance at an interface between each of the clamp members and a respective one of the upper and lower rods is measured. A thermal resistance of the resin material including thermal resistances at interfaces between the target material and respective ones of the clamp members can be measured by subtracting the thermal resistances obtained through the preliminary test, from the thermal resistance of the layered body.

The Patent Document 1 also discloses that the upper rod, the layered body and the lower rod are entirely covered by a thermally insulating material, or installed within a constant temperature or thermostatic furnace, to prevent heat release to the surroundings.

As described above, as a prerequisite to calculating a thermal resistance of a target material using the thermal resistance measuring apparatus disclosed in the Patent Document 1, it is necessary to perform the preliminary test for preliminarily measuring a thermal resistance of each of the clamp members themselves, and a thermal resistance at the interface between each of the clamp members and a respective one of the upper and lower rods. This causes complexity in measurement operation and an increase in measurement time.

PRIOR ART DOCUMENTS

PATENT DOCUMENT

Patent Document 1: JP 3858660B

SUMMARY OF INVENTION

It is an object of the present invention to facilitate simplifying measurement of a thermal conduction-related physical property value of a target material.

According to one aspect of the present invention, there is provided a thermal conduction measuring apparatus for use in measurement by a steady state comparative-longitudinal heat flow method. The thermal conduction measuring apparatus comprises: a heating-side member thermally connected to a heating source; a cooling-side member thermally connected to a cooling source; a clamping module having a heating-side clamp portion thermally coupled with the heating-side member and a cooling-side clamp portion thermally coupled with the cooling-side member, and sandwichingly holding a target material between the heating-side clamp portion and the cooling-side clamp portion; a clamping module's temperature measurement section adapted to measure a temperature of the heating-side clamp portion and a temperature of the cooling-side clamp portion; a temperature calculation section operable to derive a temperature gradient in the heating-side member and a temperature gradient in the cooling-side member, and further derive a temperature difference between the heating-side clamp portion and the cooling-side clamp portion, from the temperatures measured by the clamping module's temperature measurement section; and a physical-property-value derivation section operable, based on a calculation result by the temperature calculation section, to derive a thermal conduction-related physical property value of the target material.

According to another aspect of the present invention, there is provided a method of measuring a thermal conduction-related physical property value of a target material. The method comprises: sandwichingly holding the target material by a clamping module having a heating-side clamp portion and a cooling-side clamp portion; heating the heating-side clamp portion by a heating-side member thermally connected to a heating source, while cooling the cooling-side clamp portion by a cooling-side member thermally connected to a cooling source; measuring a temperature of the heating-side member, a temperature of the cooling-side member, a temperature of the heating-side clamp portion and a temperature of the cooling-side clamp portion; from the measured values, deriving a temperature gradient in the heating-side member and a temperature gradient in the cooling-side member and further deriving a temperature difference between the heating-side clamp portion and the cooling-side clamp portion; and, based on a result of the derivation, deriving a thermal conduction-related physical property value of the target material.

According to still another aspect of the present invention, there is provided a method of measuring a thermal conduction-related physical property value of a target material. The method comprises: sandwichingly holding the target material by a clamping module having a heating-side clamp portion and a cooling-side clamp portion; heating the heating-side clamp portion by a heating-side member thermally connected to a heating source, while cooling the cooling-side clamp portion by a cooling-side member thermally connected to a cooling source; deriving a first heat flow passing through the heating-side member, from a temperature gradient in the heating-side member; deriving a second heat flow passing through the cooling-side member, from a temperature gradient in the cooling-side member; deriving an average heat flow q passing through the clamping module, from an average value of the first heat flow and the second heat flow; deriving a temperature difference $\Delta T_B$ between the heating-side clamp portion and the cooling-side clamp portion, and further, from the average heat flow q, a thermal conductivity $k_B$ of each of the heating-side clamp portion and the cooling-side clamp portion, and a distance $t_{SB}$ between the target material and a temperature measurement position in each of the heating-side clamp portion and the cooling-side clamp portion, deriving a temperature difference $\Delta T_{SB}$; deriving a temperature difference $\Delta T_S$ between upper and lower surfaces of the target material, from the temperature difference $\Delta T_B$ and the temperature difference $\Delta T_{SB}$; deriving a temperature gradient in the target material, based on the temperature difference $\Delta T_S$ and a thickness of the target material $t_s$; and deriving a thermal conduction-related physical property value of the target material, based on the derived temperature gradient in the target material, and the average heat flow q.

BRIEF DESCRIPTION OF DRAWINGS

FIG. 1 is a diagram schematically illustrating a general configuration of a thermal conduction measuring apparatus according to one embodiment of the present invention.

FIG. 2 is a perspective view illustrating a sample block in a state after a spacer and a sample are placed thereon.

FIGS. 3A and 3B are front views of sample blocks when viewed on an assumption that each of mutually opposed side surfaces of the sample blocks is on a front side.

FIG. 4 is an explanatory diagram illustrating a procedure for calculating thermal conductivity.

FIG. 5 is an explanatory diagram illustrating the procedure for calculating thermal conductivity.

FIG. 6 is a characteristic diagram illustrating a relationship between a relative uncertainty and a sample thickness.

FIG. 7 is a characteristic diagram illustrating temporal transition of a temperature of each section and a thermal conductivity.

FIG. 8 is a table illustrating one example of a measurement result by the thermal conduction measuring apparatus.

FIG. 9 is an explanatory diagram illustrating respective configurations of an upper rod and a lower rod in a modified embodiment.

DESCRIPTION OF EMBODIMENTS

With reference to the drawings, the present invention will now be described based on one embodiment thereof.

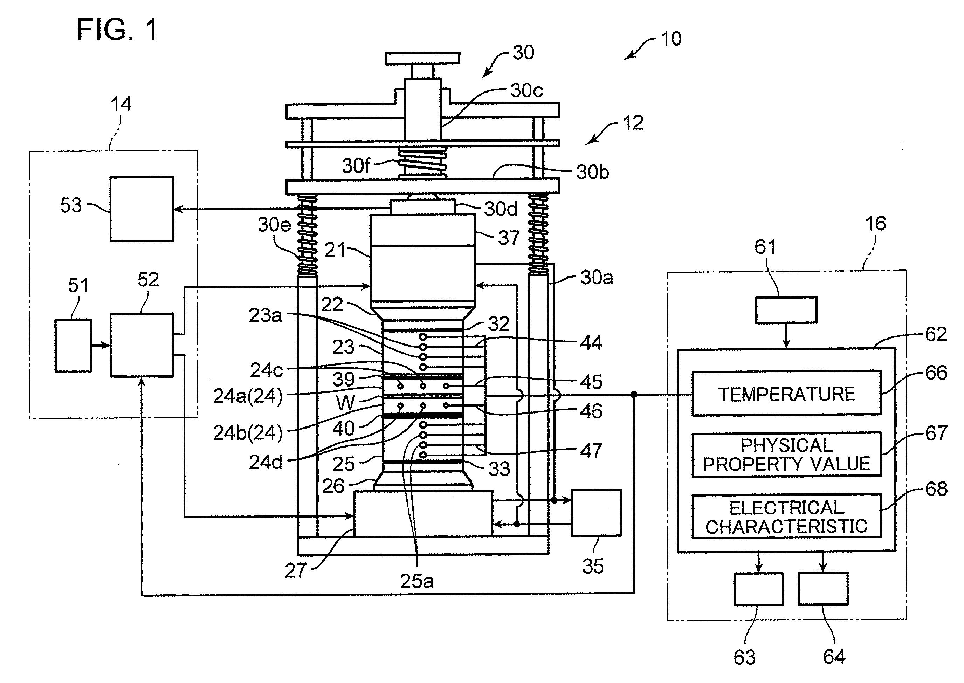

As illustrated in FIG. 1, a thermal conduction measuring apparatus 10 according to this embodiment primarily comprises an apparatus body 12, a measurement controller 14, and a recorder 16.

The apparatus body 12 primarily comprises: a heating block 21 serving as a heating source; an upper joint block 22; an upper rod 23 serving as a heating-side member; a cartridge 24; a lower rod 25 serving as a cooling-side member; a lower joint block 26; a cooling block 27 serving as a cooling source; and a pressing-force adjusting unit 30. The cooling block 27, the lower joint block 26, the lower rod 25, the cartridge 24, the upper rod 23, the upper joint block 22 and the heating block 21 are arranged upwardly in this order to form a measurement section of the apparatus body 12.

The upper rod 23 and the lower rod 25 are similar components. Each of the upper rod 23 and the lower rod 25 is formed in a circular columnar shape or a quadrangular columnar shape. In the circular column-shaped type, each of the upper rod 23 and the lower rod 25 is formed to have a diameter of 10 to 100 mm and a length of 30 to 60 mm. In the quadrangular column-shaped type, each of the upper rod 23 and the lower rod 25 is formed to have a rectangular cross-section with a side length of 10 to 100 mm. It is understood that the shape of each of the upper rod 23 and the lower rod 25 is not limited thereto.

As a material for the rods 23, 25, it is preferable to use copper (JIS C1100), aluminum (JIS A1100), nickel (JIS NW2200) or stainless steel (SUS 304, 306).

The upper rod 23 has an upper end connected to the heating block 21 through the upper joint block 22. The upper joint block 22 connects the heating block 21 and the upper rod 23 together, while allowing the upper rod 23 to be positionally fixed with respect to the heating block 21. The lower rod 25 has a lower end connected to the cooling block 27 through the lower joint block 26. The lower joint block 26 connects the cooling block 27 and the lower rod 25 together, while allowing the lower rod 25 to be positionally fixed with respect to the cooling block 27. Each of the joint blocks 22, 26 is a joint made of a highly thermally conductive material, such as copper. In other words, the upper rod 23 is thermally coupled to the heating block 21, and the lower rod 25 is thermally coupled to the cooling block 27.

Silicone grease (e.g., G-747 produced by Shin-Etsu Chemical Co., Ltd.) 32 is applied between the upper joint block 22 and the upper rod 23 to serve as an intervening layer which is a thermal resistance suppressing material. Similarly, silicone grease 33 is applied between the lower joint block 26 and the lower rod 25 to serve as an intervening layer which is a thermal resistance suppressing material. Each of the silicone greases 32, 33 has an electrically insulating property. Based on connecting the upper joint block 22 (lower joint block 26) and the upper rod 23 (lower rod 25) together through the grease 32 (33), it becomes possible to ensure close contact between the joint block 22 (26) and the rod 23 (25) and thereby prevent deterioration in heat transfer at an interface therebetween.

The heating block 21 and the cooling block 27 are designed to produce heat which is transferred in one direction from the heating block 21 toward the cooling block 27, and each of them comprises a Peltier device (illustration is omitted). The heating block 21 is adapted to generate heat according to heat generation in a heat generation section of the Peltier device, and the cooling block 27 is adapted to be cooled according to heat absorption in a heat absorption section of the Peltier device.

The apparatus body 12 is provided with a radiator 35 for absorbing heat from the Peltier devices in the heating block 21 and the cooling block 27. The radiator 35 is adapted to circulate a fluid (water, air) through the heating block 21 and the cooling block 27 so as to absorb heat generated from the Peltier devices in the blocks 21, 27. For example, the radiator 35 may be comprised of a chiller adapted to supply cooling water, or a heat sink adapted to dissipate heat to the air. Heat absorption on a side opposite to the heat generation section of the Peltier device of the heating block 21, and heat generation on a side opposite to the heat absorption section of the Peltier device of the cooling block 27, can be canceled out by the radiator 35, so that an amount of the cooling water or chilling medium to be supplied can be reduced to some extent. The radiator 35 is operable to function as cooling means for cooling the upper rod 23 by cooling the heating block 21 after completion of a measurement. Further, the radiator 35 is used in combination with an aftermentioned thermally insulating material 37 to prevent a thermal influence on an aftermentioned load cell 30d due to the heat absorption side of the Peltier device of the heating block 21.

The pressing-force adjusting unit 30 is provided in the apparatus body 12 to adjust a pressing force between the cartridge 24 and each of the upper and lower rods 23, 25, and a pressing force to be applied to a sample W. The pressing-force adjusting unit 30 has a support base 30a, a pressing member 30b movable in an upward-downward direction with respect to the support base 30a, a pressure adjusting screw 30c for pressing the pressing member 30b, a load cell 30d serving as a pressing-force detection section, and an expansion permitting spring 30f comprised of a coil spring. The pressing member 30b is disposed in a manner capable of pressing the load cell 30d, and adapted to be displaced downwardly depending on a screw-in amount of the pressure adjusting screw 30c so as to press the load cell 30d. In this manner, the pressing force between the cartridge 24 and each of the upper and lower rods 23, 25, and the pressing force to be applied to the sample W, are adjusted. The expansion permitting spring 30f is disposed between the pressure adjusting screw 30c and the pressing member 30b, and adapted to be contracted so as to permit expansion of the sample W during a measurement. Further, a coil spring 30e is provided between the pressing member 30b and the support base 30a.

The load cell 30d is disposed on the heating block 21 through a thermally insulating material 37. The load cell 30d is adapted to be applied with a load depending on the screw-in amount of the pressure adjusting screw 30c. The load cell 30d is operable to output a signal corresponding to the applied load. The signal output from the load cell 30d is input into the measurement controller 14. The measurement controller 14 has a load indication unit 53 adapted to indicate a detection value of the load cell 30d.

The cartridge 24 is provided as a clamping module for holding a sample W as a target material, and formed separately from the upper rod 23 and the lower rod 25. The cartridge 24 is adapted to be insertable between the upper rod 23 and the lower rod 25 in advance of a measurement and detachable from therebetween after the measurement. In other words, the cartridge 24 is adapted to be attachable and detachable with respect to the upper and lower blocks 23, 25.

The cartridge 24 comprises a pair of upper and lower sample blocks 24a, 24b, wherein it is adapted to sandwichingly hold the sample W between the upper sample block 24a serving as a heating-side clamp portion, and the lower sample block 24b serving as a cooling-side clamp portion. An overall thickness (thickness in the upward-downward direction) of the cartridge 24 is preferably 50 mm or less, more specifically in a range of about 2 to 20 mm, and a thickness of the sample W is preferably in a range of 0.1 mm to 10 mm. As long as the thickness of the sample W falls within the above range, almost of the entire heat of the sample blocks 24a, 24b can be transferred to the sample W, so that a thermal conduction-related physical property can be measured without employing means for thermally insulating around the apparatus body 12, or the like.

Each of the sample blocks 24a, 24b is formed in a circular columnar shape or a quadrangular columnar shape. In the circular column-shaped type, it is set to have a diameter of about 10 to 100 mm and a length (thickness in the upward-downward direction) of about 1 to 5 mm. In the quadrangular column-shaped type, it is set to have a side of about 10 to 100 mm, and a length of about 1 to 5 mm. A contact surface with the sample W is adjusted to have a flatness, surface roughness or parallelism of 0.01 mm or less.

The upper sample block 24a and the lower sample block 24b may be fastened together by an adhesive or bonding force of the sample W itself, or may be fastened together by auxiliary means such as an adhesive tape. Alternatively, each of the upper sample block 24a and the lower sample block 24b may have a flange formed to protrude therefrom. In this case, the two blocks 24a, 24b may be fastened together using the flanges (illustration is omitted) and by auxiliary means such as screw fastening. While a configuration of the flange is not particularly limited, the flange may be provided in each of the blocks 24a, 24b, for example, at a position adjacent to each of a pair of diagonally opposed corners thereof. In this case, a function of fastening the blocks 24a, 24b together can be ensured while suppressing an increase in surface area. In cases where a pair of flanges are provided in respective ones of the blocks 24a, 24b of the cartridge 24, a thickness of the flanges can be utilized when a thickness of the sample W is calculated.

As a material for the sample blocks 24a, 24b, it is preferable to use copper (JIS C1100), aluminum (JIS A1100), or nickel (JIS NW2200). Further, a surface of each of the sample blocks 24a, 24b may be subjected to a surface treatment based on electrolytic plating or non-electrolytic plating, so as to simulate an actual use condition. In cases where the thermal conduction measuring apparatus 10 is designed to measure an electrical characteristic, it is preferable to use copper as the material for the sample blocks 24a, 24b.

The cartridge 24 is connected to the upper rod 23 and the lower rod 25, respectively, through two intervening layers 39, 40. Specifically, the intervening layer 39 is located between the upper rod 23 and the upper sample block 24a, and the intervening layer 40 is located between the lower sample block 24b and the lower rod 25. Each of the intervening layers 39, 40 is a contact thermal resistance reducing material, and made of silicone grease having an electrically insulating property.

The sample W is applied onto the sample blocks 24a, 24b while allowing a thickness thereof to be adjusted to a prescribed value, using a dispenser or by means of screen printing. Specifically, in a first one 24a (24b) of the sample blocks, the sample W is applied onto an inner surface thereof which is a contact surface with the sample W. Then, the other, second, sample block 24b (24a) is superimposed on the first sample block 24a (24b) to prepare the cartridge 24.

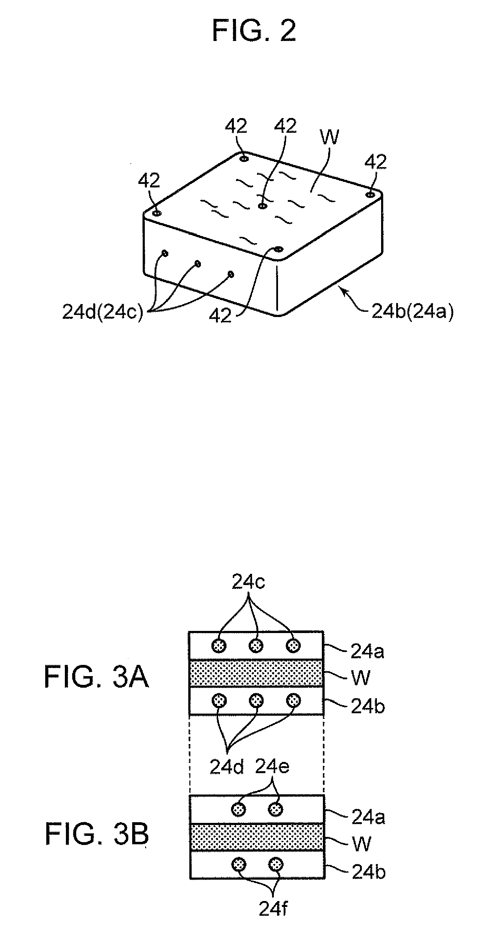

For example, in cases where the sample W is a hardening resin material, after a thickness thereof is adjusted to a prescribed value, it is hardened through a heating treatment. In this case, the thickness of the sample W may be adjusted by screen printing or the like. Alternatively, as illustrated in FIG. 2, a spacer 42 may be used to adjust a gap width between the sample blocks 24a, 24b. Specifically, the sample W is applied onto the inner surface of the first sample block 24a (24b), and a generally spherical-shaped spacer 42, such as a bead, whose diameter is known, is disposed on an area coated with the sample W. Then, in this state, the second sample block 24b (24a) is superimposed to sandwichingly hold the sample W. In this manner, the cartridge 24 having the sample W with a thickness adjusted to a given value can be obtained. The spacer 42 may be any other suitable type, as long as a thickness thereof is known, and a contact surface thereof with each of the sample blocks 24a, 24b is extremely small.

The thickness of the sample W is calculated by subtracting a sum of respective thicknesses of the sample blocks 24a, 24b from an overall thickness of the cartridge 24. For a thickness measurement, a micrometer having a minimum reading accuracy of 0.001 mm, or a meter having a measurement accuracy equal to or higher than the minimum reading accuracy, is used. The sample W is not limited to an unshaped material, but may be a shaped material. In a shaped sample W retained in a certain shape, after a thickness thereof is preliminarily measured, it may be placed on one of the sample blocks 24a, 24b.

The upper rod 23, the lower rod 25, the sample block 24a and the sample block 24b are provided with temperature measuring holes 23a, 25a, 24c, 24d, respectively. In each of the upper rod 23 and the lower rod 25, the hole (23a, 25a) is provided in a plural number (in the illustrated embodiment, four), wherein the plurality of holes 23a, 25a are arranged to line up in a longitudinal direction at even intervals. As used here, the term "longitudinal direction" means a direction along which heat is transferred through the upper rod 23 and the lower rod 25, and a direction along which the heating block 21 and the cooling block 27 are arranged (upward-downward direction).

Each of the holes 23a (25a) is formed to allow a temperature sensor 44 (47) such as a thermocouple to be inserted thereinto. Specifically, each of the holes 23a of the upper rod 23 is configured to allow a sensing element which is a temperature measuring end of the temperature sensor 44 serving as a heating-side member's temperature measurement section, to be attached thereto, and each of the holes 25a of the lower rod 25 is configured to allow a sensing element which is a temperature measuring end of the temperature sensor 47 serving as a cooling-side member's temperature measurement section, to be attached thereto. As above, temperature can be detected at a plurality of positions in the longitudinal direction, so that, based on a temperature difference between respective ones of the positions, a temperature gradient in each of the upper rod 23 and the lower rod 25 can be derived. In order to ensure close contact between an inner peripheral surface of each of the holes 23a, 25a and the temperature sensor 44 (47), each of the holes 23a (25a) is filled with non-illustrated grease.

As also illustrated in FIG. 3A, the hole (24c, 24d) in each of the sample blocks 24a, 24b is provided in a plural number (in the illustrated embodiment, three). The holes 24c, 24d are provided in one of four side surfaces of the block 24a (24b) in such a manner that they are arranged to line up in a breadthwise direction of the block 24a (24b) at even intervals. In other words, the plurality of holes 24c, 24d is arranged to line up in a direction parallel to the contact surface of the sample block 24a (24b) with the sample W. Each of the holes 24c, 24d is formed to allow a temperature sensor 45 (46) such as a thermocouple to be inserted thereinto. Specifically, each of the holes 24c, 24d of the sample block 24a (24b) is configured to allow a sensing element which is a temperature measuring end of the temperature sensor 45 (46) serving as a clamping module's temperature measurement section, to be attached thereto. In other words, the hole 24c (24d) is provided in a number of three, wherein the sensing element of the temperature sensor 45 (46) is installed in each of the holes 24c (24d). Thus, the sensing element of the temperature sensor 45 (46) is set at each of the plurality of positions in the breadthwise direction of the sample block 24a (24b). In order to ensure close contact between an inner peripheral surface of each of the holes 24c (24d) and the temperature sensor 45 (46), each of the holes 24c, 24d is filled with non-illustrated grease. Alternatively, each of the hole 24c and the hole 24d may be provided in a number of one in a respective one of the sample blocks 24a, 24b. However, based on providing the plurality of holes 24c, 24d to perform the temperature measurement at the plurality of positions, it becomes possible to enhance measurement accuracy.

For example, each of the temperature sensors 44 to 47 is comprised of a thermocouple. Alternatively, it may be comprised of any other temperature sensor having performance equivalent to that of the thermocouple. Respective detection signals of the temperature sensors 44 to 47 are input into an aftermentioned calculation section of the recorder 16.

As illustrated in FIG. 3B, the sample blocks 24a, 24b are provided with electrical-resistance measuring holes 24e, 24f, respectively. The electrical-resistance measuring hole 24e (24f) is provided in one of the side surfaces on a side opposite to the temperature measuring holes 24c (24d). The electrical-resistance measuring hole 24e (24f) is provided in a number of two, wherein each of the two holes 24e (24f) is formed as a screw hole. One of the two holes 24e (24f) is for a constant current application, and the other hole 24e (24f) is for a voltage measurement. The silicone grease 39 (40) between the sample block 24a (24b) and the upper rod 23 (lower rod 25) is a material having an electrically insulating property, and the sample block 24a (24b) is made of an electrically conductive material, so that an electrical resistance of the sample W can be measured by connecting an electrical-resistance measuring terminal (illustration is omitted) to the upper and lower sample blocks 24a, 24b.

As illustrated in FIG. 1, the measurement controller 14 has a condition setting unit 51 for setting a measurement condition and various alarms, a temperature control unit 52 for controlling a heating level of the heating block 21 and a cooling level of the cooling block 27, and the load indication unit 53.

The condition setting unit 51 is equipped with a non-illustrated input section, such as a touch panel, and adapted to allow conditions for a measurement to be entered through the input section. For example, the measurement condition to be set through the condition setting unit 51 may include a sample temperature, a sample temperature width, and an upper sample-temperature limit value. The upper sample-temperature limit value is used as a criterion for performing an alarm determination.

The temperature control unit 52 is operable, according to the condition set through the condition setting unit 51, to control a heating level of the heating block 21 and a heat-absorption level of the cooling block 27. Specifically, signals output from the temperature sensors 44 to 47 are input into the temperature control unit 52. The temperature control unit 52 is operable, based on the received signals, to control the Peltier device of the heating block 21 and the Peltier device of the cooling block 27 to allow a temperature of the sample W to become equal to the sample temperature set through the condition setting unit 51.

Further, the temperature control unit 52 is operable to control the Peltier devices of the heating block 21 and the cooling block 27 to allow respective temperatures of the heating block 21, the sample blocks 24a, 24b and the cooling block 27 to become stable at preset temperatures thereof. A temperature fluctuation range is controlled, for example, within $\pm$ 0.5K.

The load indication unit 53 is adapted to receive an input of a signal output from the load cell 30d, and indicate a pressure detected by the load cell 30d.

The recorder 16 comprises an input unit 61, a calculation unit 62, a recording unit 63, and an indication unit 64. The input unit 61 is designed to allow data about specifications necessary for calculating a temperature gradient, such as the overall thickness of the cartridge 24, and temperature measurement positions (positions of the holes 24c, 24d), to be entered therethrough. Data to be entered here is actually measured data.

The calculation unit 62 is equipped with a CPU, a ROM, a RAM, etc., and adapted to execute a program stored in the ROM so as to fulfill a given function. This function includes a temperature calculation section 66, a physical-property-value derivation section 67, and an electrical characteristic measurement section 68.

The temperature calculation section 66 is adapted to receive inputs of: signals from the temperature sensors 44 installed in the temperature measuring holes 23a of the upper rod 23; signals from the temperature sensors 45 installed in the temperature measuring holes 24c of the upper sample block 24a; signals from the temperature sensors 46 installed in the temperature measuring holes 24d of the lower sample block 24b; and signals from the temperature sensors 47 installed in the temperature measuring holes 25a of the lower rod 25.

The temperature calculation section 66 is operable to derive a temperature difference between the sample blocks 24a, 24b. Specifically, the temperature calculation section 66 is operable to derive a difference between respective average temperatures of the upper sample block 24a and the lower sample block 24b, as the temperature difference between the blocks 24a, 24b. More specifically, the temperature calculation section 66 is operable to average data about temperatures at the plurality of positions for each of the sample blocks 24a, 24b, and derive a difference between respective average values for the sample blocks 24a, 24b, as the temperature difference between the sample blocks 24a, 24b. In this case, before the averaging of temperature data, data considered to be defective may be removed. On an assumption that two of the detection ends (holes 24c, the holes 24d) located in paired relation in the upward-downward direction between the upper sample block 24a and the lower sample block 24b are defined as one set, the temperature calculation section 66 may be operable to calculate a temperature difference on a set-by-set basis, and derive an average value of the temperature differences, as the temperature difference between the sample blocks 24a, 24b. In this case, before calculating the temperature differences, data considered to be defective may be removed. Alternatively, after calculating the temperature differences, data (data about the temperature differences) considered to be defective may be removed.

Further, the temperature calculation section 66 is operable, based on data about the temperature measurement positions in the upper rod 23 and the detection values of the temperature sensors 44, to derive a temperature gradient in the upper rod 23. The temperature calculation section 66 is also operable, based on data about the temperature measurement positions in the lower rod 25 and the detection values of the temperature sensors 47, to derive a temperature gradient in the lower rod 25.

The physical-property-value derivation section 67 is operable, based on a measurement result of the temperature calculation section 66, to derive a thermal conduction-related physical property value of the sample W. This embodiment is based on an assumption that a thermal conductivity is derived. The physical-property-value derivation section 67 is operable to derive a distance between the sample W and each of the pre-stored temperature measurement positions of the sample blocks 24a, 24b, and a thickness of the sample W, by using data about the entered overall thickness of the cartridge 24, and, after calculating respective temperatures of upper and lower surfaces of the sample W, based on the detection values of the temperature sensors 45 and the temperature sensors 46, derive a temperature gradient in the sample W, based on the thickness of the sample W and data about the calculated temperatures. Then, a thermal conductivity of the sample W is derived from the temperature gradient.

The electrical characteristic measurement section 68 is operable, based on inter-terminal voltage and current values at the terminals attached to the sample blocks 24a, 24b, to derive an electrical resistance of the sample W. In the resistance measurement between the sample blocks 24a, 24b, it is necessary to measure an extremely small resistance value. Thus, it is desirable to perform the measurement by a four-terminal method (voltage is measured while applying a constant current).

The recording unit 63 is adapted to record the temperatures measured by the temperature sensors 44 to 47, the derived thermal conductivity, the measured electrical resistance of the sample W, etc. The indication unit 64 is adapted to indicate the temperatures measured by the temperature sensors 44 to 47, the derived thermal conductivity, the electrical resistance, etc.

A procedure of measuring a thermal conductivity using the thermal conduction measuring apparatus 10 will be described below.

Firstly, the cartridge 24 is prepared. In a step of preparing the cartridge 24, a sample W is applied onto a first one 24a (24b) of the sample blocks while allowing a thickness thereof to be adjusted to a prescribed value. Then, after placing the spacer 42 thereon according to need, the other, second, sample block 24b (24a) is superimposed to allow a surface coated with the sample W to be sandwiched. In this manner, the cartridge 24 is prepared. Then, an overall thickness of the cartridge 24 is measured by a micrometer. This measurement value is entered into the recorder 16 through the input unit 61. In view of regulating the thickness of the sample W, it is desirable to use the spacer 42.

Subsequently, after setting the cartridge 24 between the upper rod 23 and the lower rod 25, the temperature sensors 45, 46 are installed to respective ones of the sample blocks 24a, 24b, and the electrical-characteristic measuring terminal is attached to each of the sample blocks 24a, 24b. Before this, the temperature sensors 44, 47 have already been installed to respective ones of the upper rod 23 and the lower rod 25. In this step, the silicone greases 39, 40 are applied onto a contact surface between the upper rod 23 and the cartridge 24, and a contact surface between the cartridge 24 and the lower rod 25, respectively. This makes it possible to reduce a contact thermal resistance.

Then, the pressure adjusting screw 30c of the pressing-force adjusting unit 30 is screwed in to adjust a pressing force between the cartridge 24 and each of the upper and lower rods 23, 25, and a pressing force to be applied to the sample W. A load detected by the load cell 30d is indicated on the load indication unit 53 of the measurement controller 14. Thus, the pressing force may be adjusted while referring to the indication.

After the pressing force is adjusted, the measurement is started. Specifically, the heating block 21 is heated while cooling the cooling block 27. Along with this operation, heat is transferred from the heating block 21 to the upper rod 23, the cartridge 24 and the lower rod 25, and measurement data is output from the temperature sensors 44 to 47 at given time intervals. These temperatures are indicated on the indication unit 64 of the recorder 16, and recorded in the recording unit 63. In this step, the temperature control is continued until a sample temperature variation becomes equal to or less than 0.2 K per minute. A state after the temperature variation becomes equal to or less than 0.2 K is deemed as a steady state, and temperatures in the steady state are recorded.

In the calculation unit 62 of the recorder 16, based on respective measurement values from the temperature sensors 44 to 47 and data about the temperature measurement positions, a temperature gradient in the upper rod 23, a temperature gradient in the lower rod 25 and a temperature gradient in the cartridge 24 are derived. As for the upper rod 23 and the lower rod 25, the temperature measurement positions are pre-stored. Thus, based on the pre-stored measurement positions and the measured temperatures, respective temperature gradients in the upper rod 23 and the lower rod 25 are derived. On the other hand, as for the cartridge 24, a plurality of the cartridges 24 are different from each other in thickness. Thus, by using data about a thickness of the cartridge 24 entered through the input unit 61, a distance between the sample W and each of the pre-stored temperature measurement positions of the sample blocks 24a, 24b, and a thickness of the sample W, are derived. Then, in the calculation unit 62, respective temperatures of the upper and lower surfaces of the sample W is calculated based on the detection values of the temperature sensors 45 and the temperature sensors 46, and a temperature gradient in the sample W is derived based on data about the calculated temperatures and the thickness of the sample W.

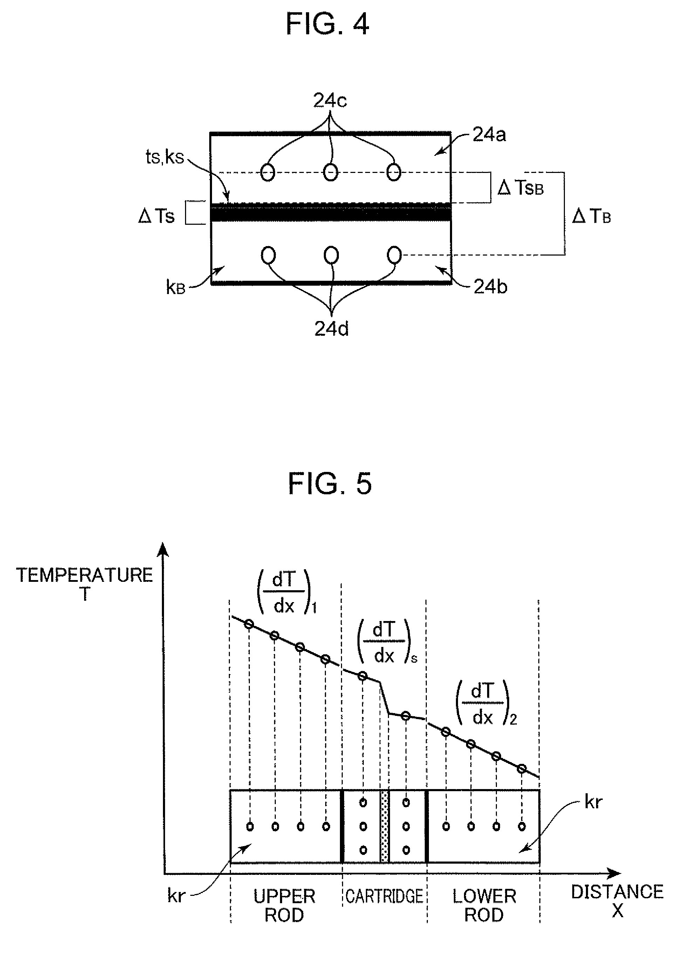

Subsequently, the calculation unit 62 derives a thermal conductivity of the sample W. A calculation of the thermal conductivity is performed as follows. As illustrated in FIGS. 4 and 5, on an assumption that: a thermal conductivity of the sample W is $ks$ [W/(m·K)]; a thermal conductivity of each of the upper rod 23 and the lower rod 25 is $kr$ [W/(m·K)]; a thermal conductivity of each of the sample blocks 24a, 24b is $k_B$ [W/(m·K)]; a thickness of the sample W is $t_S$ [m]; a distance between the sample W and each of positions of the sensors in the upper and lower sample blocks 24a, 24b is $t_{SB}$ [m]; a temperature difference between the sensors in the upper and lower sample blocks 24a, 24b is $\Delta T_B$ [K]; a temperature difference between the upper and lower surfaces of the sample W is $\Delta T_S$ [K]; a temperature difference between each of the surfaces of the sample W and a respective one of the sensors in the sample blocks 24a, 24b is $\Delta T_{SB}$ [K]; a heat flux passing through the upper rod 23 is $q_1$ [W/m²]; a heat flux passing through the lower rod 25 is $q_2$ [W/m²]; a heat flux passing through the sample W is $q$ [W/m²]; a temperature gradient in the upper rod 23 is $(dT/dx)_1$ [K/m]; a temperature gradient in the lower rod 25 is $(dT/dx)_2$ [K/m]; and a temperature gradient in the sample W is $(dT/dx)_S$ [K/m], the following relational formulas (1) to (6) are established.

$$q_1 = -kr\left(\frac{dT}{dx}\right)_1 , \ q_2 = -kr\left(\frac{dT}{dx}\right)_2 \quad \cdots\cdots\cdots\cdots\cdots (1)$$

$$q = q_1 + q_2 \quad \cdots\cdots\cdots\cdots\cdots\cdots\cdots\cdots\cdots (2)$$

$$ks = \frac{q}{\left(\dfrac{dT}{dx}\right)_s} \quad \cdots\cdots\cdots\cdots\cdots\cdots\cdots\cdots\cdots\cdots\cdots\cdots\cdots (3)$$

$$\Delta Ts = \Delta T_B - 2 \times \Delta T_{SB} \quad \cdots\cdots\cdots\cdots\cdots\cdots\cdots\cdots\cdots (4)$$

$$\Delta T_{SB} = \frac{q \times ts_B}{k_B} \quad \cdots\cdots\cdots\cdots\cdots\cdots\cdots\cdots\cdots\cdots\cdots (5)$$

$$\left(\frac{dT}{dx}\right)_s = \frac{\Delta Ts}{ts} \quad \cdots\cdots\cdots\cdots\cdots\cdots\cdots\cdots\cdots\cdots\cdots\cdots (6)$$

In the above relational formula (3), in order to derive the thermal conductivity $k_S$ of the sample W, the temperature difference $\Delta T_S$ between the upper and lower surfaces of the sample W is calculated from the relational formula (4), and the thickness $t_S$ of the sample W is calculated by subtracting a sum of the pre-stored thicknesses of the upper sample block 24a and the lower sample block 24b from the overall thickness of the cartridge 24 entered through the input unit 61. Then, the temperature gradient $(dT/dx)_S$ in the sample W is calculated by the relational formula (6). Based on the calculated temperature gradient and the heat flux q obtained from the relational formulas (1) and (2), the thermal conductivity ks of the sample W can be calculated.

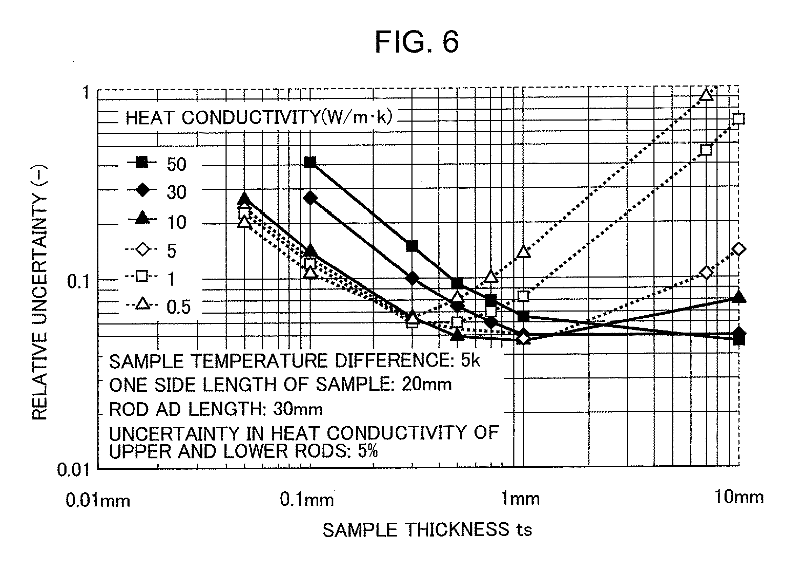

One example of an analysis result on error during measurement of the thermal conductivity ks of the sample W using the thermal conduction measuring apparatus 10 is illustrated in FIG. 6. FIG. 6 is intended to evaluate a level of fluctuation in the thermal conductivity with respect to the sample thickness $t_S$, in a plurality of samples W having various thermal conductivities $k_S$. From this result, a sample thickness allowing an uncertainty to become equal to less than 10% is as follows.

Relationship between thermal conductivity $k_S$ allowing 10% or less of uncertainty, and thickness ts

$$k_S = 0.5 \quad\quad W/m \cdot K: 0.2 \leq t_S \leq 0.6 \text{ mm}$$

$$0.5 < k_S \leq 1 \quad W/m \cdot K: 0.2 \leq t_S \leq 1 \text{ mm}$$

$$1 < k_S \leq 5 \quad\quad W/m \cdot K: 0.2 \leq t_S \leq 6 \text{ mm}$$

$$5 < k_S \leq 10 \quad\quad W/m \cdot K: 0.2 \leq t_S \leq 10 \text{ mm}$$

$$10 < k_S < 50 \quad \text{W/m·K}: 0.3 \le t_S \le 10 \text{ mm}$$

$$k_S = 50 \quad \text{W/m·K}: 0.5 \le t_S \le 10 \text{ mm}$$

From this evaluation result, it is proven that a sample W having a larger thermal conductivity $k_S$ can ensure measurement accuracy even if it has a relatively large thickness. This means that, in a sample W having a large thermal conductivity $k_S$, heat of the upper sample block 24a is easily transferred to the lower sample block 24b, and thereby an amount of heat to be released outside is reduced. It is also proven that, in a sample W having a high thermal conductivity $k_S$ (about 5 W/mK or more), the measurement accuracy can be obtained as long as the sample W has a thickness of 10 mm or less. As for an upper limit value of the thickness of the sample W, a sample W having a lower thermal conductivity $k_S$ is subjected to severer constraints in ensuring the measurement accuracy. As for a lower limit value of the sample thickness, a sample W having a low thermal conductivity $k_S$ (0.5 W/mK) can ensure the measurement accuracy, as long as it has a thickness of 0.2 mm or more, and a sample W having the highest thermal conductivity $k_S$ (50 W/mK) can also ensure the measurement accuracy, as long as it has a thickness of 0.5 mm or more.

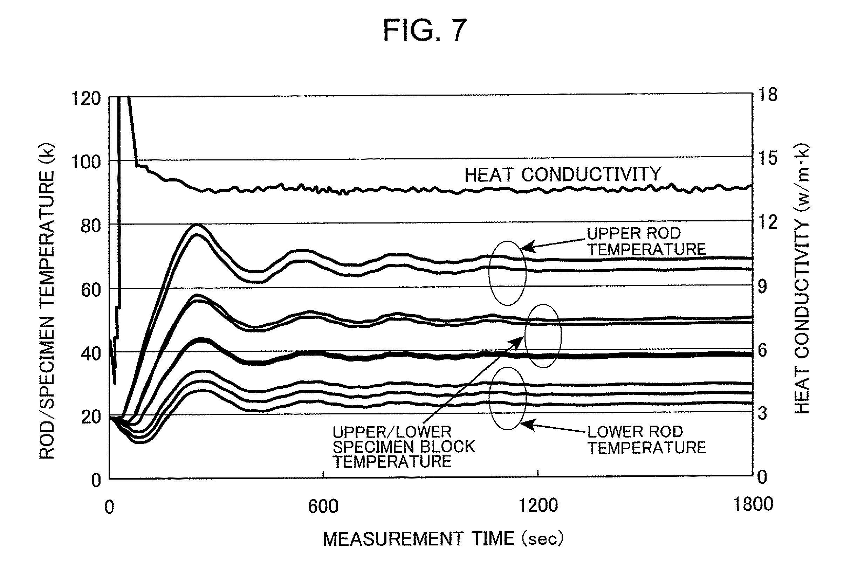

FIG. 7 illustrates one example of temporal transition of respective temperatures of the upper rod 23, the lower rod 25 and the upper and lower sample blocks 24a, 24b, and temporal transition of a measured thermal conductivity $k_S$. As is evidenced from FIG. 7, although each of the temperatures fluctuate in a period after start of the measurement through until it falls in a steady state, a derived thermal conductivity $k_S$ is kept stable even in the period.

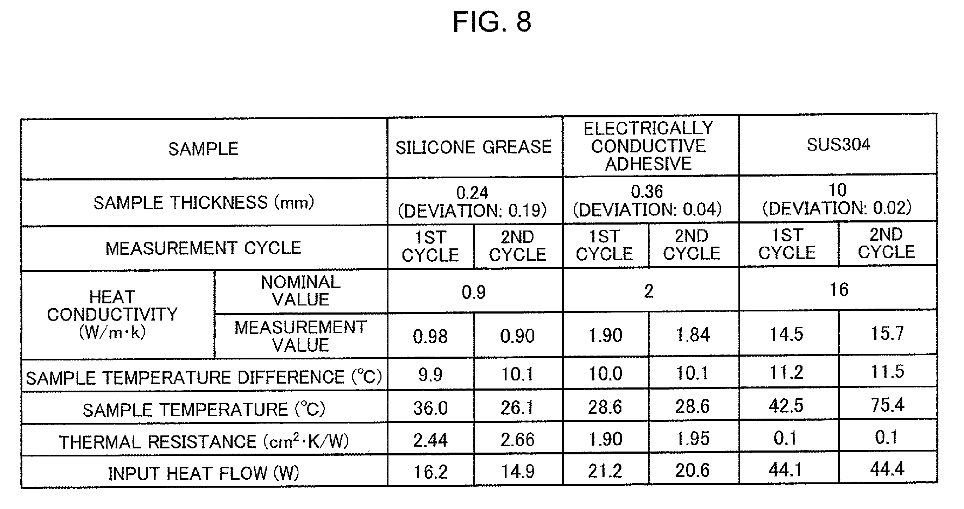

FIG. 8 illustrates one example of a result obtained by subjecting various samples W to the measurement. As a sample W, silicone grease, electrically conductive adhesive and stainless steel material (SUS304) were employed. In this measurement, as for the silicone grease or the electrically conductive adhesive, the spacer 42 was used to regulate a thickness thereof. As for the stainless steel material, it was used after preliminarily adjusting a thickness thereof. As illustrated in FIG. 8, it is proven that the thermal conduction measuring apparatus 10 is capable of accurately measuring thermal conductivity for various samples W.

As described above, according to the above embodiment, the measurement for each sample W can be started by preparing a cartridge 24 for a sample W to be measured, and performing a replacement operation for the cartridge 24. This eliminates a need for replacing the costly upper and lower rods 23, 25 for each sample. Thus, it becomes possible to perform measurement of heat transfer characteristics of a plurality of types of samples W at low cost. In addition, the cartridge-type apparatus allows the cartridge to be detached from the apparatus body 12. Thus, for example, a heat transfer characteristic of a sample W can be measured before and after an environmental test therefor. This makes it possible to learn a change in the heat transfer characteristic before and after the environmental test.

In the above embodiment, the temperature sensors 45, 46 are provided to measure respective temperatures of the upper sample block 24a and the lower sample block 24b sandwichingly holding a sample W therebetween, and the temperature calculation section 66 is operable to derive a temperature difference between the upper and lower sample blocks 24a, 24b and further derive respective temperature gradients in the upper rod 23 and the lower rod 25. Then, the physical-property-value derivation section 67 is operable, based on a calculation result of the temperature calculation section 66, to derive a thermal conductivity of the sample W. As above, in the above embodiment, respective temperatures of the upper sample block 24a and the lower sample block 24b can be measured to derive a temperature difference therebetween, which eliminates a need for performing a preliminary test as in the conventional apparatus. This makes it possible to facilitate simplifying the measurement of the thermal conductivity of the sample W.

In the above embodiment, the cartridge 24 is adapted to sandwichingly hold a sample W between the sample blocks 24a, 24b and to be sandwiched between the upper and lower rods 23, 25. Thus, even in cases where the sample W is a material melting by heat, such as a resin material, the molten sample W never adheres to the rods 23, 25. This makes it possible to avoid a situation where the rods 23, 25 have to be replaced. In addition, the heat transfer characteristic is calculated by measuring the respective temperatures of the upper and lower sample blocks 24a, 24b, so that it is less likely to be affected by disturbances.

In the above embodiment, in each of the sample blocks 24a, 24b, a temperature thereof can be measured at a plurality of positions in a breadthwise direction thereof, so that it becomes possible to enhance measurement accuracy.

In the above embodiment, the spacer 42 may be employed. In this case, a distance between the sample blocks 24a, 24b becomes stable, even in a situation where the sample W consists of a pasty unshaped material or is likely to be deformed. This makes it possible to ensure the measurement accuracy even if the sample W consists of an unshaped material or is likely to be deformed.

Further, the spacer 42 may be formed in a generally spherical shape. In this case, it becomes possible to prevent an increase in contact area between the spacer 42 and the upper sample block 24a (lower sample block 24b) so as to suppress an adverse effect on the measurement of the thermal conductivity of the sample W.

In the above embodiment, the upper rod 23 and the upper sample block 24a are electrically insulated from each other, and the lower rod 25 and the lower sample block 24b are electrically insulated from each other. However, they are not thermally insulated from each other. Thus, an electrical characteristic of the cartridge 24 or the sample W can be measured without being affected by the upper rod 23 and the lower rod 25. Thus, in the above embodiment, the measurement of the electrical characteristic can be performed in addition to the measurement of the heat transfer characteristic. Further, in the above embodiment, the sample blocks 24a, 24b whose electrical characteristic is known, are employed, so that it becomes possible to derive an electrical characteristic of the sample W.

In the above embodiment, each of the heating block 21 and the cooling block 27 is formed using a Peltier device. Thus, heating and cooling control functions of the Peltier device can be activated, so that it becomes possible to enhance controllability and shorten a period before stable measurement. In addition, after completion of the measurement, based on changing a direction of application of voltage, the heating block 21 can be cooled by the Peltier device of the heating block 21, while heating the cooling block 27 by the Peltier device of the cooling block 27, so that it becomes possible to reduce a period of time before each of the heating block 21 and the cooling block 27 has a temperature handleable by an operator, and thereby shorten a time required for a replacement operation for the cartridge 24.

In the above embodiment, the radiator 35 is provided to cool the upper rod 23 after completion of the measurement, so that it becomes possible to shorten the time required for the replacement operation for the cartridge 24.

In the above embodiment, a thermal resistance of a contact thermal resistance reducing material, such as the grease 39 (40) used between the upper rod 23 (lower rod 25) and the sample block 24a (24b), can be measured concurrently with the measurement of the thermal conductivity of the sample W.

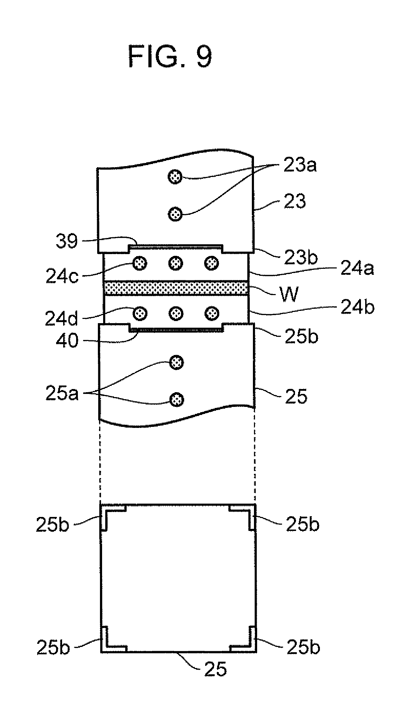

The present invention is not limited to the above embodiment, but various changes and modifications may be made therein without departing from the spirit and scope of the present invention. For example, as illustrated in FIG. 9, the upper sample block 24a may be fitted with the upper rod 23 by means of mating fit or the like, and the lower sample block 24b may be fitted with the lower rod 25 by means of mating fit or the like. More specifically, a fitting protrusion (hereinafter referred to simply as "protrusion") 23b serving as a fittable portion is provided on a lower end of the upper rod 23. This protrusion 23b protrudes downwardly from a peripheral edge, more specifically, each corner, of a lower end surface of the upper rod 23. In the illustrated embodiment, it is provided at each of four corners and formed in a hook-like shape in top plan view. Differently from the aforementioned embodiment, the upper sample block 24a has a transverse cross-section slightly smaller than that of the upper rod 23, so that the sample block 24a is coupled to the upper rod 23 while being in contact with respective inner surfaces of the protrusions 23b of the upper rod 23. Further, a fitting protrusion 25b serving as a fittable portion is provided on an upper end of the lower rod 25. This protrusion 25b has the same shape as that of the protrusion 23b of the upper rod 23. The lower sample block 24b has a transverse cross-section slightly smaller than that of the lower rod 25, so that the sample block 24b is coupled to the lower rod 25 while being in contact with respective inner surfaces of the protrusions 25b of the lower rod 25. It is understood that a configuration of each of the protrusions 23b, 25b is not limited to the above type. For example, it may be provided along each side of the lower end surface (or upper end surface), instead of each of the four corners, and formed in a flat plate shape.

As above, although the upper rod 23 (lower rod 25) comprises a rod body having a constant transverse cross-sectional area, and protrusions 23b (25b) each protruding from the rod body in a longitudinal direction thereof, the protrusions 23b (25b) extending from the rod body have no impact on the temperature of the upper rod 23 (lower rod 25), because all of the temperature measuring holes 23a (25a) are provided in the rod body having a constant transverse cross-sectional area.

In this modified embodiment, the upper sample block 24a can be held at a given position by the protrusions 23b of the upper rod 23, and the lower sample block 24b can be held at a given position by the protrusions 25b of the lower rod 25. This makes it possible to easily perform centering of the upper rod 23, the sample blocks 24a, 24b and the lower rod 25. Specifically, a temperature difference between respective measuring ends of the upper sample block 24a and the lower sample block 24b is derived, so that it is only necessary to derive respective temperature gradients in the upper rod 23 and the lower rod 25, but there is no need to derive a thermal conductivity at an interface between the upper rod 23 (lower rod 25) and the upper sample block 24a (lower sample block 24b). Therefore, it is not necessary for each of the upper rod 23 and the lower rod 25 to have a constant transverse cross-section over the entire length in the longitudinal direction thereof, which permits the protrusions 23b, 25b causing variation in cross-sectional area to be provided at respective ends of the upper rod 23 and the lower rod 25. Thus, based on providing the temperature gradient measuring holes 23a (25a) in a region of the upper rod 23 (lower rod 25) having a constant cross-sectional area, and forming an end region of the rod 23 (25) as a portion fittable with the sample block 24a (24b), it becomes possible to provide a configuration facilitating centering, while suppressing an adverse effect on the temperature gradient.

In the above embodiment, the upper rod 23 (lower rod 25) is provided with the plurality of temperature measuring holes 23a (25a), and a temperature gradient thereof is derived based on temperatures measured at respective positions of the holes 23a (25a). However, this is not essential. A non-contact type temperature sensor may be used to measure a temperature of the upper rod 23 (lower rod 25) at a plurality of positions in the longitudinal direction thereof so as to derive the temperature gradient.

In the above embodiment, the temperature measuring holes 24c, 24d are provided, respectively, in the upper sample block 24a and the lower sample block 24b, and the measurement at each position of the holes 24c, 24d is performed by a thermocouple. However, this is not essential. For example, a non-contact type temperature sensor (clamping module's temperature measurement section) may be used to measure temperatures at respective positions of the holes 24c, 24d so as to calculate a temperature difference. In this case, an emissivity at each of the holes 24c, 24d is 1, which has an advantage of being able to eliminate an operation of coating a surface with paint or the like to adjust the emissivity to 1.

In the above embodiment, each of the heating block 21 and the cooling block 27 is designed to have a Peltier device. However, this is not essential. The heating block 21 may be designed to be heated by a heater comprised of a heating wire or the like, and the cooling block 27 may be designed to be provided with a cooling water passage and cooled by cooling water.

In the above embodiment, the heating block 21 (cooling block 27) and the rod 23 (25) are coupled together by the joint block 22 (26). However, this is not essential. The joint blocks 22, 26 may be omitted by adjusting respective shapes of the heating block 21 and the cooling block 27.

In the above embodiment, the apparatus is designed to be capable of measuring an electrical characteristic in addition to a heat transfer characteristic. However, this is not essential. The apparatus may be designed to be capable of measuring only a heat transfer characteristic of a sample W.

In the above embodiment, the upper rod 23, the cartridge 24 and the lower rod 25 are not thermally insulated. Alternatively, they may be covered by a thermally insulating material, or installed within a thermostatic chamber, so as to suppress heat release or loss.

An outline of the above embodiment is as follows.

(1) The thermal conduction measuring apparatus according to the above embodiment comprises a clamping module's temperature measurement section adapted to measure respective temperatures of a heating-side clamp portion and a cooling-side clamp portion sandwichingly holding a target material therebetween, wherein a temperature calculation section is operable to derive a temperature difference between the heating-side clamp portion and the cooling-side clamp portion, and further derive respective temperature gradients in a heating-side member and a cooling-side member. Then, a physical-property-value derivation section is operable, based on a calculation result from the temperature calculation section, to derive a thermal conduction-related physical property value of the target material. As above, in the thermal conduction measuring apparatus according to the above embodiment, respective temperatures of the heating-side clamp portion and the cooling-side clamp portion can be measured to derive a temperature difference therebetween, which eliminates a need for performing a preliminary test as in the conventional apparatus. This makes it possible to facilitate simplifying measurement of a thermal conduction-related physical property of the target material.

(2) Preferably, the clamping module's temperature measurement section has temperature measuring ends, wherein a plurality of the temperature measuring ends are arranged at positions in a breadthwise direction of the clamping module. In this aspect, it becomes possible to enhance measurement accuracy.

(3) The thermal conduction measuring apparatus may comprise a spacer adapted to regulate a gap between the heating-side clamp portion and the cooling-side clamp portion. In this aspect, the spacer is provided between the heating-side clamp portion and the cooling-side clamp portion. Thus, for example, even in a situation where the target material consists of a pasty unshaped material or is likely to be deformed, a distance between the heating-side clamp portion and the cooling-side clamp portion becomes stable. This makes it possible to ensure the measurement accuracy even if the target material consists of an unshaped material or is likely to be deformed.

(4) Preferably, the spacer is formed in a generally spherical shape. In this aspect, it becomes possible to prevent an increase in contact area between the spacer and the heating-side clamp portion (cooling-side clamp portion) so as to suppress an adverse effect on the measurement of the thermal conductivity of the target material.

(5) Preferably, each of the heating-side clamp portion and the cooling-side clamp portion is made of an electrically conductive material, wherein the thermal conduction measuring apparatus comprises: an intervening layer made of an electrically insulating material and provided between the heating-side member and the heating-side clamp portion; an intervening layer made of an electrical insulating material and provided between the cooling-side member and the cooling-side clamp portion; and an electrical characteristic measurement section operable to measure an electrical characteristic between the heating-side clamp portion and the cooling-side clamp portion.

In this aspect, the heating-side member and the heating-side clamp portion are electrically insulated from each other, and the cooling-side member and the cooling-side clamp portion are electrically insulated from each other. However, they are not thermally insulated from each other. Thus, an electrical characteristic of the clamping module or the target material can be measured without being affected by the heating-side member and the cooling-side member. Thus, according to this aspect, it becomes possible to measure an electrical characteristic in addition to the thermal conduction-related physical property value, for a single target material.

(6) The heating-side member may have a fittable portion adapted to be fitted onto the heating-side clamp portion, and the cooling-side member may have a fittable portion adapted to be fitted onto the cooling-side clamp portion.

In this aspect, the heating-side clamp portion can be held at a given position by the fittable portion of the heating-side member, and the cooling-side clamp portion can be held at a given position by the fittable portion of the cooling-side member. This makes it possible to easily perform centering of the heating-side member, the two clamp portions and the cooling-side member.

(7) One or both of the cooling source and the heating source may comprise a Peltier device.

In this respect, at least one of heating and cooling control functions of the Peltier device can be activated, so that it becomes possible to enhance controllability and shorten a period before stable measurement. Further, in cases where each of the cooling source and the heating source comprises a Peltier device, based on changing a direction of application of voltage, the heating source can be cooled by the Peltier device of the heating source, while heating the cooling source by the Peltier device of the cooling source. This makes it possible to reduce a period of time before each of the heating source and the cooling source has a temperature handleable by an operator, and thereby shorten a time required for a replacement operation for the clamping module.

(8) The thermal conduction measuring apparatus may comprise cooling means operable to cool the heating-side member. In this respect, it becomes possible to shorten the time required for the replacement operation for the clamping module after completion of the measurement.

(9) When the thermal conduction measuring apparatus is designed to measure a thermal conductivity of a target material having a thermal conductivity ranging from 0.1 to 100 W/m·K, it is preferable that a thickness of the target material is in a range of 0.1 to 10 mm. As long as the thickness of the target material falls within the above range, almost of the entire heat of the heating-side clamp portion can be transferred to the target material, so that a thermal conduction-related physical property can be measured without employing means for thermally insulating around the apparatus, or the like.

(10) Preferably, the clamping module has a replaceable cartridge structure. In this aspect, even in cases where a plurality of target materials are measured, it is only necessary to replace the cartridge-type clamping module, so that it becomes possible to facilitate the replacement operation.

(11) A thermal conduction measuring method according to the above embodiment is designed to measure a thermal conduction-related physical property value of a target material. The method comprises: sandwichingly holding the target material by a clamping module having a heating-side clamp portion and a cooling-side clamp portion; heating the heating-side clamp portion by a heating-side member thermally connected to a heating source, while cooling the cooling-side clamp portion by a cooling-side member thermally connected to a cooling source; measuring a temperature of the heating-side member, a temperature of the cooling-side member, a temperature of the heating-side clamp portion and a temperature of the cooling-side clamp portion; from the measured values, deriving a temperature gradient in the heating-side member and a temperature gradient in the cooling-side member and further deriving a temperature difference between the heating-side clamp portion and the cooling-side clamp portion; and, based on a result of the derivation, deriving a thermal conduction-related physical property value of the target material.

(12) Preferably, in the thermal conduction measuring method, each of the temperatures of the heating-side clamp portion and the cooling-side clamp portion is measured at a plurality of positions in a breadthwise direction of each of the clamp portions.

(13) The thermal conduction measuring method may comprise, after completion of the measurement, cooling the heating-side member by cooling means.

(14) The thermal conduction measuring method may comprise preparing, as the clamping module, a module having a replaceable cartridge structure, and attaching the clamping module between the heating-side member and the cooling-side member to perform the measurement of the thermal conduction-related physical property value of the target material, in the attached state.

(15) The thermal conduction measuring method may comprise providing a temperature measuring end adapted to measure the temperatures of the heating-side clamp portion and the cooling-side clamp portion, and measuring the temperatures of the heating-side clamp portion and the cooling-side clamp portion by the temperature measuring end.

As described above, according to the above embodiment, measurement of a thermal conduction-related physical property value of a target material can be simplified.

EXPLANATION OF CODES

21: heating block (one example of heating source)
23: upper rod (one example of heating-side member)
23a: hole

23b: protrusion

24: cartridge (one example of clamping module)

24a: upper sample block (one example of heating-side clamp portion)

24b: lower sample block (one example of cooling-side clamp portion)

25: lower rod (one example of cooling-side member)

25b: protrusion

27: cooling block (one example of cooling source)

35: radiator

39: intervening layer

40: intervening layer

42: spacer

44: temperature sensor

45: temperature sensor (one example of clamping module's temperature measurement section)

46: temperature sensor(one example of clamping module's temperature measurement section)

47: temperature sensor

52: temperature control unit

62: calculation unit

66: temperature calculation section

67: physical-property-value derivation section

68: electrical characteristic measurement section

**Claims**

1. A thermal conduction measuring apparatus for use in measurement by a steady state comparative-longitudinal heat flow method, comprising:

   a heating-side member thermally connected to a heating source;

   a cooling-side member thermally connected to a cooling source;

   a clamping module having a heating-side clamp portion thermally coupled with the heating-side member and a cooling-side clamp portion thermally coupled with the cooling-side member, and sandwichingly holding a target material between the heating-side clamp portion and the cooling-side clamp portion;

   a clamping module's temperature measurement section adapted to measure a temperature of the heating-side clamp portion and a temperature of the cooling-side clamp portion;

   a temperature calculation section operable to derive a temperature gradient in the heating-side member and a temperature gradient in the cooling-side member, and further derive a temperature difference between the heating-side clamp portion and the cooling-side clamp portion, from the temperatures measured by the clamping module's temperature measurement section; and

   a physical-property-value derivation section operable, based on a calculation result by the temperature calculation section, to derive a thermal conduction-related physical property value of the target material.

2. The thermal conduction measuring apparatus as defined in claim 1, wherein the clamping module's temperature measurement section has temperature measuring ends, and wherein a plurality of the temperature measuring ends are arranged at positions in a breadthwise direction of the clamping module.

3. The thermal conduction measuring apparatus as defined in claim 1 or 2, which comprises a spacer adapted to regulate a gap between the heating-side clamp portion and the cooling-side clamp portion.

4. The thermal conduction measuring apparatus as defined in claim 3, wherein the spacer is formed in a generally spherical shape.

5. The thermal conduction measuring apparatus as defined in any one of claims 1 to 4, wherein each of the heating-side clamp portion and the cooling-side clamp portion is made of an electrically conductive material, and wherein the thermal conduction measuring apparatus comprises:

   an intervening layer made of an electrically insulating material and provided between the heating-side member and the heating-side clamp portion;

   an intervening layer made of an electrical insulating material and provided between the cooling-side member and the cooling-side clamp portion; and
an electrical characteristic measurement section operable to measure an electrical characteristic between the heating-side clamp portion and the cooling-side clamp portion.

6. The thermal conduction measuring apparatus as defined in any one of claims 1 to 5, wherein:

the heating-side member has a fittable portion adapted to be fitted onto the heating-side clamp portion; and
the cooling-side member has a fittable portion adapted to be fitted onto the cooling-side clamp portion.

7. The thermal conduction measuring apparatus as defined in any one of claims 1 to 6, wherein one or both of the cooling source and the heating source comprise a Peltier device.

8. The thermal conduction measuring apparatus as defined in any one of claims 1 to 7, which comprises cooling means operable to cool the heating-side member.

9. The thermal conduction measuring apparatus as defined in any one of claims 1 to 8, which is designed to measure a thermal conductivity of a target material having a thermal conductivity ranging from 0.1 to 100 W/m·K, wherein a thickness of the target material is in a range of 0.1 to 10 mm.

10. The thermal conduction measuring apparatus as defined in any one of claims 1 to 9, wherein the clamping module has a replaceable cartridge structure.

11. A method of measuring a thermal conduction-related physical property value of a target material, comprising:

sandwichingly holding the target material by a clamping module having a heating-side clamp portion and a cooling-side clamp portion;
heating the heating-side clamp portion by a heating-side member thermally connected to a heating source, while cooling the cooling-side clamp portion by a cooling-side member thermally connected to a cooling source;
measuring a temperature of the heating-side member, a temperature of the cooling-side member, a temperature of the heating-side clamp portion and a temperature of the cooling-side clamp portion;
from the measured values, deriving a temperature gradient in the heating-side member and a temperature gradient in the cooling-side member and further deriving a temperature difference between the heating-side clamp portion and the cooling-side clamp portion; and
based on a result of the derivation, deriving a thermal conduction-related physical property value of the target material.

12. The method as defined in claim 11, wherein each of the temperatures of the heating-side clamp portion and the cooling-side clamp portion is measured at a plurality of positions in a breadthwise direction of each of the clamp portions.

13. The method as defined in claim 11 or 12, which comprises, after completion of the measurement, cooling the heating-side member by cooling means.

14. The method as defined in any one of claims 11 to 13, which comprises preparing, as the clamping module, a module having a replaceable cartridge structure, and attaching the clamping module between the heating-side member and the cooling-side member to perform the measurement of the thermal conduction-related physical property value of the target material, in the attached state.

15. The method as defined in any one of claims 11 to 14, which comprises providing a temperature measuring end adapted to measure the temperatures of the heating-side clamp portion and the cooling-side clamp portion, and measuring the temperatures of the heating-side clamp portion and the cooling-side clamp portion by the temperature measuring end.

16. A method of measuring a thermal conduction-related physical property value of a target material, comprising:

sandwichingly holding the target material by a clamping module having a heating-side clamp portion and a cooling-side clamp portion;
heating the heating-side clamp portion by a heating-side member thermally connected to a heating source, while cooling the cooling-side clamp portion by a cooling-side member thermally connected to a cooling source;

deriving a first heat flow passing through the heating-side member, from a temperature gradient in the heating-side member;

deriving a second heat flow passing through the cooling-side member, from a temperature gradient in the cooling-side member;

deriving an average heat flow q passing through the clamping module, from an average value of the first heat flow and the second heat flow;

deriving a temperature difference $\Delta T_B$ between the heating-side clamp portion and the cooling-side clamp portion, and further, from the average heat flow q, a thermal conductivity $k_B$ of each of the heating-side clamp portion and the cooling-side clamp portion, and a distance $t_{SB}$ between the target material and a temperature measurement position in each of the heating-side clamp portion and the cooling-side clamp portion, deriving a temperature difference $\Delta T_{SB}$;

deriving a temperature difference $\Delta T_S$ between upper and lower surfaces of the target material, from the temperature difference $\Delta T_B$ and the temperature difference $\Delta T_{SB}$;

deriving a temperature gradient in the target material, based on the temperature difference $\Delta T_S$ and a thickness of the target material $t_S$; and

deriving a thermal conduction-related physical property value of the target material, based on the derived temperature gradient in the target material, and the average heat flow q.

FIG. 1

# FIG. 2

# FIG. 3A

# FIG. 3B

# FIG. 4

# FIG. 5

# FIG. 6

EP 2 418 477 A1

# FIG. 7

EP 2 418 477 A1

# FIG. 8

| SAMPLE | | SILICONE GREASE | | ELECTRICALLY CONDUCTIVE ADHESIVE | | SUS304 | |
|---|---|---|---|---|---|---|---|
| SAMPLE THICKNESS (mm) | | 0.24 (DEVIATION: 0.19) | | 0.36 (DEVIATION: 0.04) | | 10 (DEVIATION: 0.02) | |
| MEASUREMENT CYCLE | | 1ST CYCLE | 2ND CYCLE | 1ST CYCLE | 2ND CYCLE | 1ST CYCLE | 2ND CYCLE |
| HEAT CONDUCTIVITY (W/m·k) | NOMINAL VALUE | 0.9 | | 2 | | 16 | |
| | MEASUREMENT VALUE | 0.98 | 0.90 | 1.90 | 1.84 | 14.5 | 15.7 |
| SAMPLE TEMPERATURE DIFFERENCE (°C) | | 9.9 | 10.1 | 10.0 | 10.1 | 11.2 | 11.5 |
| SAMPLE TEMPERATURE (°C) | | 36.0 | 26.1 | 28.6 | 28.6 | 42.5 | 75.4 |
| THERMAL RESISTANCE (cm²·K/W) | | 2.44 | 2.66 | 1.90 | 1.95 | 0.1 | 0.1 |
| INPUT HEAT FLOW (W) | | 16.2 | 14.9 | 21.2 | 20.6 | 44.1 | 44.4 |

EP 2 418 477 A1

# FIG. 9

**INTERNATIONAL SEARCH REPORT**

| International application No. |
|---|
| PCT/JP2010/001610 |

A.  CLASSIFICATION OF SUBJECT MATTER
*G01N25/18*(2006.01)i

According to International Patent Classification (IPC) or to both national classification and IPC

B.  FIELDS SEARCHED

Minimum documentation searched (classification system followed by classification symbols)
G01N25/18

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)
JSTPlus(JDreamII)

C.  DOCUMENTS CONSIDERED TO BE RELEVANT

| Category* | Citation of document, with indication, where appropriate, of the relevant passages | Relevant to claim No. |
|---|---|---|
| Y | JP 3858660 B2  (Hitachi, Ltd.),<br>20 December 2006 (20.12.2006),<br>paragraph [0040]; fig. 1<br>& US 2003/0072349 A1    & CN 1410765 A | 1-16 |
| Y | CHIBA H., OGUSHI T., NAKAJIMA H., TORII K.,<br>TOMIMURA T., ONO F., Steady state comparative-<br>longitudinal heat flow method using specimen of<br>different thicknesses for measuring thermal<br>conductivity of lotus-type porous metals,<br>J Appl Phys, 2008, Vol.103, No.1, Page.013515 | 1-16 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 May, 2010 (11.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/001610

C (Continuation).   DOCUMENTS CONSIDERED TO BE RELEVANT

| Category* | Citation of document, with indication, where appropriate, of the relevant passages | Relevant to claim No. |
|---|---|---|
| Y | Hiroshi CHIBA, Tetsuro OGUSHI, Kaoru TORII, Toshio TOMIMURA, Hideo NAKAJIMA, Fumio ONO, "Ichi Hoko Netsuryu Teijo Hikakuho (Shikenhen Atsusa Henkaho) ni yoru Netsu Dendoritsu Sokuteiho no Kento", National Heat Transfer Symposium of Japan Koen Ronbunshu(CD-ROM), 2007, vol.44th, page C211 | 1-16 |
| Y | JP 2006-145446 A  (Mitsubishi Electric Corp.), 08 June 2006 (08.06.2006), entire text; fig. 1 (Family: none) | 1-16 |
| A | JP 2000-55846 A  (Nichias Corp.), 25 February 2000 (25.02.2000), entire text; all drawings (Family: none) | 1-16 |
| P,X | Takuya HIRATA, Hirokazu TANAKA, Satoshi YANAGIURA, Satoshi WATANABE, Tetsuro OGUSHI, "Dodensei Secchakuzai Netsudendoritsu Sokutei Sochi no Kaihatsu -Cartridge Hoshiki Ichi Hoko Netsuryu Teijo Hikakuho-", The Japan Society of Mechanical Engineers Proceedings of Thermal Engineering Conference, 06 November 2009 (06.11. 2009), vol.2009, pages 169 to 170 | 1-16 |

Form PCT/ISA/210 (continuation of second sheet) (July 2009)

## REFERENCES CITED IN THE DESCRIPTION

**Patent documents cited in the description**

- JP 3858660 B